# EUROPEAN PATENT APPLICATION

(11) **EP 0 964 417 A2**
(43) Date of publication of application: **15.12.1999**
(21) Application number: 99304077.3
(22) Date of filing: 26.05.1999
(51) Int. Cl.: H01H 11/00, H01H 13/70

(54) **Article comprising co-injection molded component having integral light guide**

(30) Priority: 08.06.1998 US 93331
(71) Applicant: LUCENT TECHNOLOGIES INC., Murray Hill, New Jersey 07974-0636 (US)
(72) Inventor: Decker, Robert LeRoy, Parsippany, New Jersey 07054 (US); Weld, John David, Succasunna, New Jersey 07876 (US)
(74) Representative: Johnston, Kenneth Graham

(57) **Abstract**

A device, such as a cellular phone, is provided having a component, e.g., a device housing, containing an integral light guide, where the component is formed by co-injection molding. The integral light guide is capable of distributing light from one or more sources through or along the component to distant keys or a distant liquid crystal display, thereby reducing the required number of light sources in the device. In addition, because the component and light guide are co-injection molded in a single step, the complexity and cost of the manufacturing of the component, and thus the overall device, is typically reduced.

## Description

### BACKGROUND OF THE INVENTION

### Field of the Invention

The invention relates to devices containing lighted features such as keypads and liquid crystal displays (LCDs), in particular devices such as cellular and cordless telephones.

### Discussion of the Related Art

Portable personal electronic devices such as cellular and cordless phones typically require the use of lighted keypads and lighted LCDs to allow operation in dark or dimly lit environments. Light emitting diodes (LEDs) are generally used as the light sources for such devices, due to LEDs' relatively low power requirements and relatively high illumination, as compared to other light sources. In order for LEDs to provide adequate and uniform illumination of keypads and LCDs, however, an array of numerous LEDs is typically required, e.g., 6 or more, each additional LED increasing battery power consumption and thereby decreasing battery charge time. Often, therefore, a keypad and LCD of a cellular phone are lit only for a few seconds after the phone is turned on, allowing just enough time to dial. In addition, as the desire for smaller cellular phones increases, ways to use less light sources are sought. One area of research has been better batteries. Experiments have been performed, for example, with miniature fuel-cells, lithium-ion batteries, and zinc-air batteries. Research has also been performed to develop improved circuits and processors that require less power to operate devices such as cellular phones. While such battery and circuit technology is promising, the technology has not yet become inexpensive and practical enough for widespread commercial applicability.

It would therefore be desirable, with both current batteries and microprocessors as well as future developments, to reduce the number of LEDs in a device such as a cellular phone. Moreover, because cost is a significant factor in portable personal electronic devices, relatively simple, inexpensive techniques for reducing the required number of light sources in such devices and/or allowing increased lighting time would be advantageous.

### SUMMARY OF THE INVENTION

The invention provides a device, such as a cellular phone, having a component, e.g., a housing, containing an integral light guide for distributing light to keys and/or a liquid crystal display, where the component is formed by co-injection molding. (Component indicates any portion of an article, e.g., an outer portion such as a housing offering structural and environmental protection to internal electronics. Integral indicates that the light guide is part of the component and is manufactured with the component by the co-injection molding process, as opposed to subsequent assembly of a pre-molded support piece with a pre-molded light guide. Light guide indicates a material capable of transmitting light from one location to a distant location, e.g., 10-20 inches, in a device. Typical light guide materials have a refractive index ranging from about 1.3 to about 1.7.)

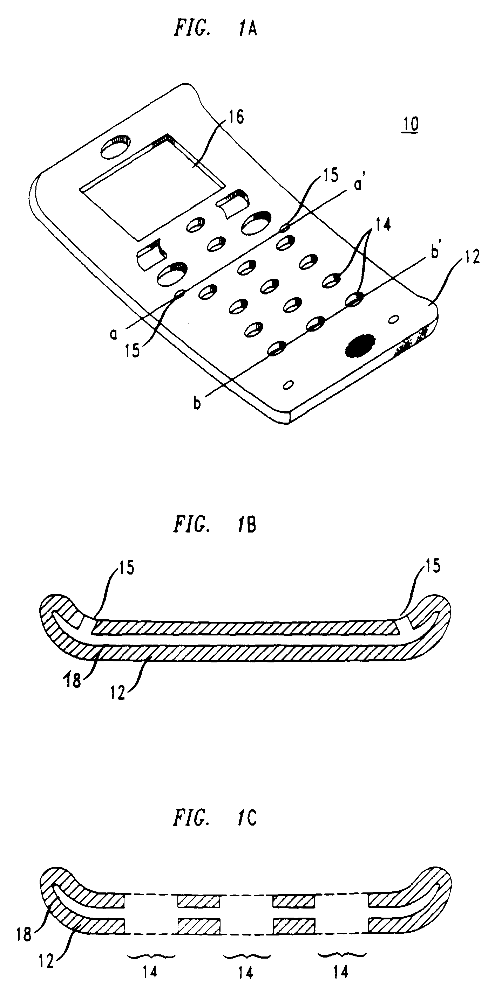

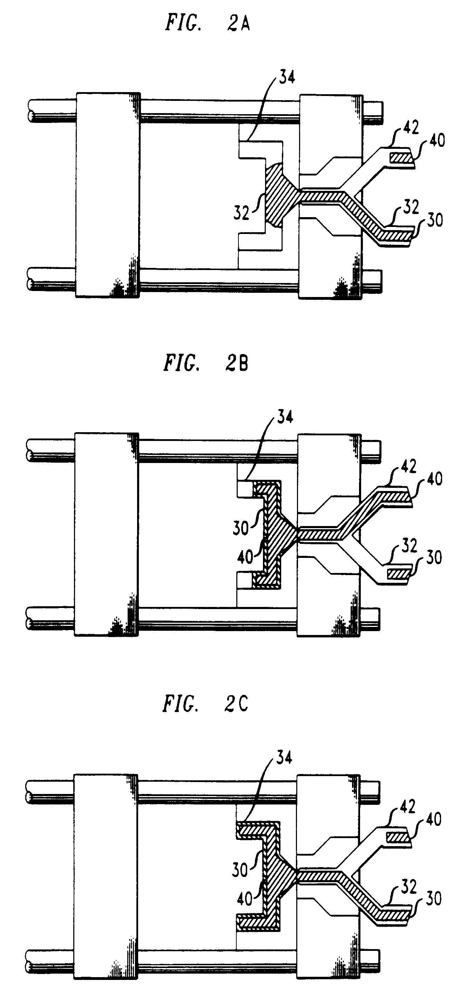

In one embodiment, the component containing an integral light guide is a device housing 10, as illustrated in Figs. 1A to 1C (the interior view of housing 10 is shown). (Housing indicates a component that provides structural support and/or environmental protection.) The integral light guide 18 of the device housing 10 is capable of distributing light from a source through or along the housing to distant keys (located at gaps 14) or a distant LCD. The co-injection molding process allows the light guiding material to be molded within the device housing in a single manufacturing process. Specifically, as reflected in Figs. 2A to 2C, co-injection molding involves injecting a first polymeric material 30 into a mold cavity 34, such that the mold cavity 34 is only partially filled. A polymeric light guide material 40 is then injected into the mold cavity 34, such that the light guide material 40 becomes substantially surrounded by the previously injected first material.

The presence of a component having a co-injection molded integral light guide allows reduction in the number of light sources in a device, since the light guide is able to distribute light from one source or from a few sources throughout the device. The integral light guide is therefore capable of providing an overall reduction in power requirements. Moreover, an article having a component with an integral light guide is typically easier and less expensive to prepare than an article requiring assembly of a pre-molded light guide with a pre-molded support piece.

### BRIEF DESCRIPTION OF THE DRAWINGS

Figs. 1A-1C illustrate a device housing with integral light guide of an article of the invention.

Figs. 2A-2C illustrate a co-injection molding process useful for preparing a device housing for an article of the invention.

### DETAILED DESCRIPTION OF THE INVENTION

The invention relates to an article, such as a cellular or portable phone, containing a component with an integral light guide, the component formed by co-injection molding. The light guide acts to distribute light from one or more sources to distant features, e.g. keys or LCD screens, of the article. In one embodiment, the component having an integral light guide is a device housing. An example of the type of device housing useful in an article of the invention is shown in Figs. 1A to 1C. Fig. 1A shows the interior view of a device housing 10 for a cellular phone. The housing 10 contains an outer layer 12, and openings 14, 16 for keypads and an LCD screen. Unlike prior housings, however, the housing 10 of the invention contains an integral light guide 18, typically located within the outer layer 12, as reflected in Figs. 1B and 1C, which show cross-sectional views of the housing 10 at lines a-a' and b-b', respectively. (Typically, co-injection molding will result in the integral light guide of the invention being located substantially within an outer layer of material, but it is possible for the integral light guide to constitute any portion of the housing, e.g., for the integral light guide to constitute the lower half of a housing. It is also possible for a housing to contain two integral light guides of differing materials (to provide desired lighting), or for the entire housing to be formed from one or more integral light guides.)

Figs. 1A and 1B also show openings 15 in the outer layer 12, the openings 15 allowing light from internal light sources to enter the integral light guide 18 such that the light is distributed to distant locations in the device. The use of such openings 15 will depend on several considerations including, for example, the number of LEDs or alternate light sources used, the brightness desired, the size and number of keypads, the size of LCD screen, and the distance that the light must travel. (In other embodiments, e.g., where the light guide is not located substantially within an outer layer, it is possible that such openings 15 will not be necessary.) In addition, as illustrated in Fig. 1C, the light from the integral light guide 18 is distributed to keypad locations and/or LCD locations. Fig. 1C shows the keypad openings 14 in the housing 10. The light traveling through the light guide 18 distributes into the keys inserted into the openings 14. The light guide 18 is advantageously substantially straight from source to distribution points, because curves tend to induce light to exit the guide 18.

The light guide 18 of the device housing of this embodiment is generally formed from a material having a refractive index ranging from about 1.3 to about 1.7. The material is typically a thermoplastic resin. Examples of suitable resins include polycarbonate, acrylics, polytetrafluoroethylene, cellulose acetate butyrate, cellulose acetate, acetal (homopolymer), polypropylene, polybutylene, ionomer, low-density polyethylene, polyvinylchloride, nylons (e.g., type 66), ureaformaldehyde, polystyrene, polysulfone, and styrene-acrylonitrile. Considerations for selecting the light guide material include light transmitting properties, structural properties, and compatibility with outer layer materials, as well as the needs of the device. The thickness of the light guide layer will similarly depend on light transmitting properties, structural properties, and the needs of the device. The outer layer of a housing suitable for use in the article of the invention is typically also formed from a thermoplastic resin. Useful materials for the outer layer include acrylonitrile-butadiene styrene (ABS), polycarbonate (PC), and ABS/PC blends. The selection of the outer layer involves considerations such as strength, color, anticipated environment of use, and compatibility with the light guide material. A control sample is easily formed to determine useful combinations of outer layers and integral light guide materials.

The invention's device housing containing integral light guide is formed by a co-injection molding process. One embodiment of a co-injection molding process is illustrated in Figs. 2A to 2C. A co-injection molded article is formed by injecting a first polymeric material 30 (which forms an outer layer) from a first injection nozzle 32 into a mold cavity 34, such that the mold cavity 34 is only partially filled, as shown in Fig. 2A. A polymeric light guide material 40 is then injected into the mold cavity 34 from a second injection nozzle 42, such that the light guide material 40 becomes substantially surrounded by the previously injected first material 30, as shown in Fig. 2B. Optionally, while maintaining the structure reflected in Fig. 2B, a small amount of the first material 30 is then injected into the cavity to seal the point of injection, as shown in Fig. 2C.

Conditions for obtaining this desired co-injected structure vary depending, for example, on temperature and the viscosities of the materials. Typically, co-injection molding of a multi-layered article is eased by using materials with similar melt temperatures (e.g., within about 100°F) and similar viscosities (e.g., within about 10 Pa-sec). It is also advantageous for the two materials to adhere to each other at their interface, to prevent or reduce subsequent structural and reliability problems. Such adhesion is improved by using polymeric materials of similar compositions.

Due to the typical flow of the two polymeric materials, the light guide material becomes substantially surrounded by the first polymeric material (constituting the outer layer of the molded housing). However, access must generally be provided into the integral light guide, to (a) allow light from the light sources of a device to enter the light guide, and (b) allow the light in the light guide to be distributed to elements such as keypads and LCDs. Optionally, such entry and exit points for the light are provided by a cutting operation subsequent to co-injection molding. Alternatively, it is possible to use in-mold moveable core-pins during the co-injection molding, as known in the art of co-injection molding. Such pins block the first polymeric material (the outer layer) from flowing to certain areas during molding, but are moved during subsequent injection of the light guide material, thereby allowing the light guide material to flow to the surface of the molded part. It is also possible to provide light entry and exit points by molding extensions onto the surface of the molded part, such extensions allowing light guide material to flow above the surface of the part. Subsequent to molding, the extensions are cut or broken from the part to expose the integral light guide. Thus, upon completion, the housing contains an outer layer having discontinuities, the discontinuities allowing light to enter and exit the integral light guide. Control samples are easily formed to determine useful operating conditions for co-injection molding.

Light sources useful in the article of the invention include LEDs. The light source selected, e.g., the particular color and amperage of an LED, will depend on the particular application, e.g., size of the article, desired brightness and color, environment of use, and properties of the light guide material.

It is contemplated that components containing co-injection integral light guides will be useful for a variety of articles, including cellular and portable telephones, automobile instrument clusters, and audio equipment (e.g., compact disc players).

The invention will be further clarified by the following example, which is intended to be exemplary.

### Example 1

A cellular phone front housing, useful as a rigid cover for internal electronics (i.e., the printed circuit board, liquid crystal display, speaker, and microphone), was formed with an integral light guide by a co-injection molding process. An acrylonitrile-butadiene styrene (ABS) thermoplastic resin (Magnum 9010) was obtained from Dow Chemical Co., Midland, MI. An acrylic thermoplastic resin (Plexiglas VH), designed to be optically clear, was obtained from AtoHaas Americas Inc., Philadelphia, PA. An injection mold cavity used for cellular phone front housings was installed in a co-injection molding press manufactured by Battenfeld of America, Inc., W. Warwick, RI. The press was a standard 164 ton co-injection molding press with two 6.4 oz. injection barrels, a co-injection nozzle manifold, and Unilogic 8000 controls. The mold cavity was heated to about 160 to 210°F. The ABS resin was dried and placed in the A (outer skin) injection barrel, and the acrylic resin was dried and placed in the B (core) injection barrel.

The ABS resin was initially injected from the A barrel into the co-injection nozzle manifold, and then the acrylic resin was injected into the nozzle manifold. The resins formed a concentric melt at abut 450 to 550°F with the ABS surrounding the acrylic. This concentric melt was continuously injected into the mold cavity at about 10,000 to 20,000 pounds per square inch (psi) until the cavity was filled. A packing pressure of about 20,000 psi was held while the resins cooled in the mold cavity. The resulting housing had an internal acrylic core layer about 0.025 inches thick surrounded by an ABS outer skin layer about 0.013 inches thick on either side of the core layer.

The light guiding properties of the housing were confirmed by cutting a hole through the ABS skin to access the clear acrylic core. A light emitting diode (LED) was used to transmit light into the hole. A second hole was cut through the ABS skin at a location distant from the first hole. Light from the LED was transmitted through the acrylic core, and emitted at this second hole.

Other embodiments of the invention will be apparent to those skilled in the art from consideration of the specification and practice of the invention disclosed herein.

## Claims

1. A process for forming an article, comprising the step of:
co-injection molding a component comprising an integral light guide, the integral light guide capable of distributing light.

2. The process of claim 1, wherein the component is a device housing.

3. The process of claim 2, wherein the integral light guide comprises a thermoplastic resin having a refractive index ranging from about 1.3 to about 1.7.

4. The process of claim 3, wherein the integral light guide comprises a material selected from polycarbonate, acrylic, polytetrafluoroethylene, cellulose acetate butyrate, cellulose acetate, acetal, polypropylene, polybutylene, ionomer, low-density polyethylene, polyvinylchloride, nylons, urea-formaldehyde, polystyrene, polysulfone, and styrene-acrylonitrile.

5. The process of claim 2, wherein the component further comprises an outer layer, the outer layer comprising discontinuities for passing the light into the integral light guide.

6. An article comprising:
one or more light sources; and
a co-injection molded component comprising an integral light guide, the integral light guide capable of distributing light from at least one of the light sources.

7. The article of claim 6, wherein the component is a device housing.

8. The article of claim 7, wherein the integral light guide comprises a thermoplastic resin having a refractive index ranging from about 1.3 to about 1.7.

9. The article of claim 8, wherein the integral light guide comprises a material selected from polycarbonate, acrylic, polytetrafluoroethylene, cellulose acetate butyrate, cellulose acetate, acetal, polypropylene, polybutylene, ionomer, low-density polyethylene, polyvinylchloride, nylons, urea-formaldehyde, polystyrene, polysulfone, and styrene-acrylonitrile.

10. The article of claim 7, wherein the housing further comprises an outer layer over the integral light guide.

11. The article of claim 10, wherein the outer layer comprises discontinuities for allowing the light from the one or more light sources into the integral light guide.
